# EUROPÄISCHE PATENTSCHRIFT

(11) **EP 3 081 810 B1**
(45) Veröffentlichungstag und Bekanntmachung des Hinweises auf die Patenterteilung: **09.02.2022**
(21) Anmeldenummer: 16000772.0
(22) Anmeldetag: 05.04.2016
(51) Int. Cl.: F04B 9/04, F01N 3/20, F04B 43/08, F04B 17/03

(54) **PUMPE FÜR EIN SCR-SYSTEM IN FAHRZEUGEN**
PUMP FOR AN SCR SYSTEM IN VEHICLES
POMPE POUR UN SYSTEME SCR DE VEHICULES AUTOMOBILES

(30) Priorität: 13.04.2015 DE 102015004868
(43) Veröffentlichungstag der Anmeldung: 19.10.2016
(73) Patentinhaber: Niethammer, Bernd, 78126 Königsfeld (DE)
(72) Erfinder: Niethammer, Bernd, 78126 Königsfeld (DE)
(74) Vertreter: Kohl, Karl-Heinz

(56) Entgegenhaltungen:
- WO-A1-2009/075581
- US-A- 1 330 919
- US-A- 1 557 878
- US-A1- 2008 008 605

## Beschreibung

Die Erfindung betrifft eine Pumpe für ein SCR-System in Fahrzeugen nach dem Oberbegriff des Anspruches 1.

Es ist bekannt, die in Abgasen eines Verbrennungsmotors von Fahrzeugen enthaltenen Stickoxide mittels eines selektiven katalytischen Reduktionsverfahrens (SCR-Verfahren) zumindest zu verringern. Hierfür wird eine wässrige Harnstofflösung mittels einer Pumpe dem Abgasstrom in definierter Menge zugesetzt, wodurch die Stickoxide aufgrund einer chemischen Reaktion mit der Harnstofflösung in Stickstoff und Wasser umgesetzt werden. Zum Fördern der Harnstofflösung werden Pumpen eingesetzt, wie GummiMembran-Pumpen, Zahnradpumpen, Orbitalpumpen, Schlauchpumpen, Kolbenpumpen und dergleichen. Sie sind allerdings wenig robust, so dass sie bei Verwendung in SCR-Systemen in Fahrzeugen keine lange Lebensdauer haben. Auch ist mit ihnen eine genaue Dosierung der in den Abgasstrom einzuführenden Harnstofflösung nur schwierig möglich. Eine genaue Dosierung ist aber für eine zuverlässige Reduktion der Stickoxide im Abgasstrom erforderlich. Eine SCR-Pumpen ist aus US 1557878 bekannt.

Der Erfindung liegt die Aufgabe zugrunde, die gattungsgemäße Pumpe so auszubilden, dass sie bei robuster Ausbildung eine lange Lebensdauer hat und dabei eine genaue Dosierung des zu pumpenden Mediums gewährleistet ist.

Diese Aufgabe wird bei der gattungsgemäßen Pumpe erfindungsgemäß mit den kennzeichnenden Merkmalen des Anspruches 1 gelöst.

Bei der erfindungsgemäßen Pumpe ist der Pumpenkolben mit wenigstens einem metallischen Federbalg versehen. Er wird beim Pumpvorgang elastisch verformt. Der metallische Faltenbalg hat eine sehr lange Lebensdauer und optimale Dauerfestigkeit. Dadurch wird gewährleistet, dass die Pumpe über ihre Einsatzdauer eine genaue Dosierung des zu pumpenden Mediums sicherstellt. Der metallische Federbalg kann über einen großen Temperaturbereich eingesetzt werden, ohne dass Nachteile in Bezug auf die Präzision der Fördermenge zu befürchten sind. Der metallische Federbalg unterliegt nahezu keinem Verschleiß, was zur langen Lebensdauer und zur optimalen Dosiergenauigkeit beiträgt.

Vorteilhaft ist der Pumpenkolben ein Hohlkolben, der vom Federbalg umgeben ist. Da der Federbalg beim Pumpvorgang axial elastisch verformt wird, unterstützt er die Verschiebebewegung des Hohlkolbens beim Pumpen. Der Federbalg begrenzt einen Aufnahmeraum für das zu pumpende Medium radial.

Hierbei kann zwischen dem Federbalg und dem Mantel des Hohlkolbens der Aufnahmeraum für das zu pumpende Medium gebildet werden. In diesem Falle dichtet der metallische Federbalg diesen Aufnahmeraum radial nach außen ab, so dass das zu pumpende Medium sicher im Aufnahmeraum gehalten werden kann. Da der metallische Federbalg Abstand vom Mantel des Hohlkolbens hat, ist ein direkter Kontakt mit dem Hohlkolben nicht gegeben, so dass der Federbalg auch keinem Verschleiß unterliegt. Diese Ausbildung unterstützt die lange Lebensdauer der Pumpe. Durch eine solche Ausbildung wird in vorteilhafter Weise auch das Totvolumen reduziert. Auch hat diese Gestaltung den Vorteil, dass die Krafteinleitung direkt an der Druckfläche erfolgen kann.

Bei einer anderen vorteilhaften Ausführungsform ist der Aufnahmeraum für das zu pumpende Medium zwischen dem Federbalg und einem Mantel eines Gehäuseteiles gebildet. In diesem Fall bildet der Federbalg in vorteilhafter Weise den Mantel des Pumpenkolbens. Der Aufnahmeraum für das zu pumpende Medium befindet sich in diesem Falle auf der Außenseite des Federbalges.

Der Federbalg erstreckt sich vorteilhaft zwischen einem den Hohlkolben umgebenden Ring und einem Radialflansch des Hohlkolbens. Der Federbalg ist mit seinem einen Ende an dem Ring und mit seinem anderen Ende am Radialflansch des Hohlkolbens befestigt. Die Befestigung erfolgt mediumsdicht, so dass das zwischen dem Faltenbalg und dem Mantel des Hohlkolbens befindliche Medium nicht aus dem Aufnahmeraum nach außen unbeabsichtigt entweichen kann.

Der Federbalg kann auch mit dem einen Ende an einem axial verschiebbaren Ring und mit dem anderen Ende an einem gehäusefesten Ring befestigt sein. Eine solche Ausbildung ist dann vorgesehen, wenn der Federbalg den Mantel des Pumpenkolbens bildet. In diesem Falle wird durch Axialverschieben des Ringes das zu fördernde Medium angesaugt bzw. unter Druck gesetzt, je nach Bewegungsrichtung des Ringes. Eine solche Ausbildung ergibt einen konstruktiven einfachen Aufbau der Pumpe.

Der axial verschiebbare Ring und der gehäusefeste Ring liegen bevorzugt koaxial zueinander, so dass der zwischen ihnen befindliche Federbalg zuverlässig gedehnt und zusammengezogen werden kann.

Bevorzugt umgibt der Federbalg mit radialem Abstand einen Betätigungsstößel des Pumpenkolbens. Er liegt mit dem freien Ende des Betätigungsstößels an einer Exzenterscheibe des Exzenterantriebes an. Über den Betätigungsstößel wird, gesteuert durch die Exzenterscheibe, der Pumpenkolben axial in beiden Richtungen bewegt, um das Medium anzusaugen und es unter Druck dem Verbraucher zuzuführen.

Der Betätigungsstößel steht vorteilhaft unter der Kraft wenigstens einer Feder.

Die Feder ist bevorzugt eine Druckfeder, die den Federbalg umgibt. Damit kein Verschleiß auftritt, umgibt die Druckfeder den Federbalg mit radialem Abstand. Dadurch ist gewährleistet, dass die Druckfeder den Pumpenkolben zuverlässig verschieben kann, um das zu fördernde Medium unter Druck zu setzen. Andererseits kann sich der metallische Federbalg hierbei ohne Behinderung durch die Druckfeder entsprechend elastisch verformen. Bei einer anderen Ausführungsform ist die Feder eine Druckfeder, die an einer Scheibe angreift, von welcher der Betätigungsstößel absteht. In diesem Falle greift die Druckfeder an der vom Betätigungsstößel abgewandten Seite der Scheibe an, die abgedichtet geführt ist, so dass kein zu pumpendes Medium an der Scheibe vorbei gelangen kann. Vorteilhaft bildet die Scheibe einen Abschluss des Pumpenkolbens. Die Scheibe ist hierbei vorteilhaft so vorgesehen, dass sie teilweise den Aufnahmeraum für das zu pumpende Medium begrenzt.

Bei einer anderen Ausführungsform ist die Feder eine Zugfeder, die vom Federbalg mit radialem Abstand umgeben ist. In diesem Falle ist die Zugfeder so angeordnet, dass sie den Betätigungsstößel mit Abstand umgibt, wobei die Zugfeder ihrerseits mit Abstand vom metallischen Federbalg umgeben ist.

Das Pumpenelement ist mit wenigstens einem Druckventil und wenigstens einem Saugventil versehen. Über das Saugventil wird bei einer entsprechenden Bewegung des Pumpenkolbens das zu pumpende Medium in den Aufnahmeraum angesaugt. Das Druckventil ist hierbei so ausgebildet, dass es während dieser Ansaugphase geschlossen ist. Wird anschließend der Pumpenkolben in entgegengesetzter Richtung verschoben, wird das im Aufnahmeraum befindliche Medium unter Druck gesetzt, wodurch das Saugventil geschlossen und das Druckventil geöffnet wird.

Nach der Erfindung münden das Druckventil und das Saugventil unmittelbar in den Aufnahmeraum. Dies trägt zu einer kompakten Bauweise der Pumpe bei. Da das zu pumpende Medium, insbesondere die wässrige Harnstofflösung, bei verhältnismäßig hohen Temperaturen (etwa -11 °C) eingefriert, ist die Pumpe mit einer Ausgleichsvorrichtung versehen, um die beim Gefrieren des Mediums auftretende Volumenvergrößerung aufzufangen. Diese Ausgleichsvorrichtung ist im Pumpenelement untergebracht. Die Ausgleichsvorrichtung sorgt dafür, dass beim Einfrieren des Mediums keine Pumpenteile zerstört werden.

Die Ausgleichsvorrichtung weist wenigstens einen Ausgleichskolben auf, der den Aufnahmeraum für das Medium teilweise begrenzt und gegen Federkraft verschiebbar ist.

Die Pumpe ist in besonders vorteilhafter Weise aus einzelnen Modulen zusammengebaut. Die Modulbauweise ermöglicht es, die Pumpe in unterschiedlichen Ausbildungen zusammenzusetzen, je nach Anwendungsfall der Pumpe.

Die Pumpenelemente können unterschiedlich angeordnet sein.

So kann die Pumpe mehrere Pumpenelemente aufweisen, die in Reihe nebeneinander oder auch in Sternform an einem Gehäuse angeordnet sind. Bei der Reihenanordnung können die Pumpenelemente an einer oder auch mehreren Seiten des Gehäuses nebeneinander vorgesehen sein. In diesem Falle erstreckt sich die Antriebswelle durch das Gehäuse, wobei in Höhe der einzelnen Pumpenelemente jeweils eine Exzenterscheibe sitzt, mit der die Pumpenelemente betätigt werden können.

Sind die Pumpenelemente in Sternform am Gehäuse angeordnet, dann kann eine einzige Exzenterscheibe eingesetzt werden, mit der die sternförmig angeordneten Pumpenelemente betätigt werden. Die Pumpe kann bei einer solchen Ausbildung sehr kompakt ausgebildet sein. Auch die Antriebswelle kann kurz sein, weil die Pumpenelemente bei sternförmiger Anordnung auf gleicher Höhe um das Gehäuse verteilt angeordnet sind. Die Exzenterscheibe ist hierbei so ausgebildet, dass die verschiedenen Pumpenelemente in der zeitlich richtigen Reihenfolge betätigt werden.

Die Pumpenelemente können beispielsweise auch in Boxerform am Gehäuse vorgesehen sein.

Bei einer vorteilhaften Ausführungsform ist die Pumpe mit einem Gefrierschutz versehen, der verhindert, dass bei einem eventuellen Einfrieren des Mediums der Federbalg beschädigt oder zerstört wird.

Dieser Gefrierschutz ist bei einer bevorzugten Ausführungsform mit wenigstens einer Druckfeder versehen, die am Betätigungsstößel auf seiner dem Aufnahmeraum für das zu pumpende Medium zugewandten Seite unter einer Vorspannkraft anliegt. Sie ist größer als der Normaldruck der Pumpe beim Betrieb, aber kleiner als der durch Einfrieren des Mediums im Aufnahmeraum auftretende Druck. Solange das Medium im Aufnahmeraum nicht einfriert, wirkt die Druckfeder als starres Bauteil. Gefriert das Medium im

Aufnahmeraum ein, vergrößert sich sein Volumen. Dies führt dazu, dass die Druckfeder entsprechend elastisch verformt wird und die durch das Einfrieren entstehende Volumenvergrößerung des Mediums auffängt, so dass der Federbalg nicht beschädigt wird.

Die Druckfeder ist vorteilhaft geschützt in einer Hülse untergebracht, die wenigstens teilweise vom Federbalg umgeben ist.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale.

Weitere Merkmale der Erfindung ergeben sich aus den weiteren Ansprüchen, der Beschreibung und den Zeichnungen.

Die Erfindung wird anhand einiger Ausführungsformen näher erläutert. Es zeigen
- Fig. 1: in einem Schnitt eine erfindungsgemäße Pumpe,
- Fig. 2: in einem Schnitt einen Teil einer zweiten Ausführungsform einer erfindungsgemäßen Pumpe,
- Fig. 3: in einer Darstellung entsprechend Fig. 2 eine dritte Ausführungsform einer erfindungsgemäßen Pumpe,
- Fig. 4: in einer Darstellung entsprechend Fig. 2 eine vierte Ausführungsform einer erfindungsgemäßen Pumpe
- Fig. 5: in einer Darstellung entsprechend Fig. 2 eine fünfte Ausführungsform einer erfindungsgemäßen Pumpe,
- Fig. 6: einen Schaltplan eines SCR-Systems, das eine erfindungsgemäße Pumpe aufweist,
- Fig. 7: in einer Darstellung entsprechend Fig. 1 eine sechste Ausführungsform einer erfindungsgemäßen Pumpe,
- Fig. 8: den Schaltplan einer weiteren Ausführungsform eines SCR-Systems mit der erfindungsgemäßen Pumpe gemäß Fig. 7,
- Fig. 9: in schematischer Darstellung verschiedene Anordnungen der erfindungsgemäßen Pumpen,
- Fig. 10: im Schnitt zwei durch einen gemeinsamen Antrieb betätigbare Pumpen.

Die im Folgenden beschriebenen Pumpen werden für SCR (selective catalytic reduction-Systeme) eingesetzt. Mit den Pumpen wird eine wässrige Harnstofflösung in den Abgasstrang vor einem SCR-Katalysator eines Dieselfahrzeuges eingespritzt, um schädliche Stickoxide in den Abgasen zu reduzieren bzw. zu entfernen. Die Harnstofflösung wird mittels der Pumpen dosiert zugegeben, so dass die Stickoxide zuverlässig aus dem Abgas entfernt oder so stark reduziert werden können, dass sie keine Umweltbelastung darstellen.

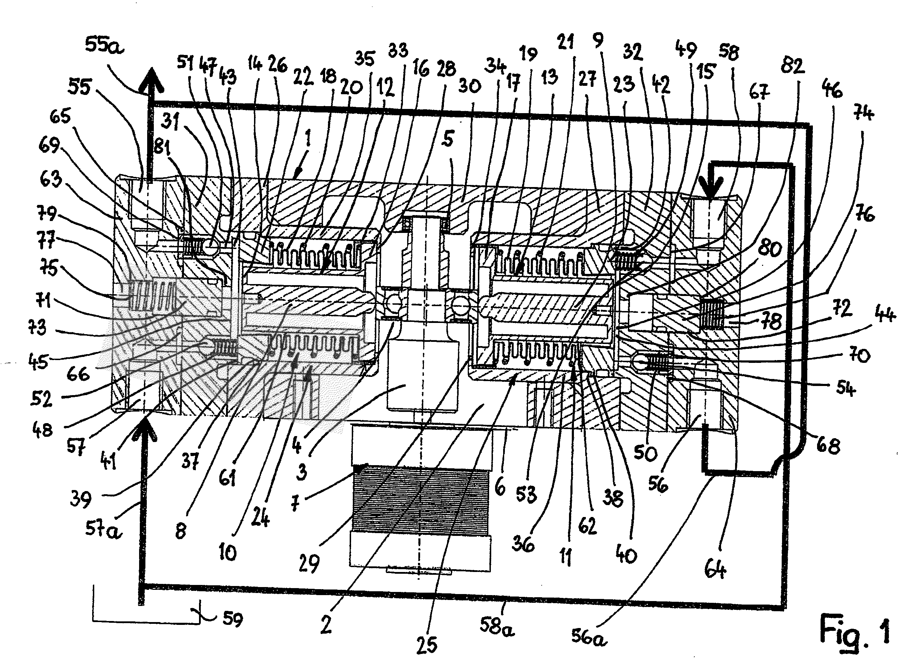

Die Pumpe gemäß Fig. 1 hat ein Gehäuse 1. Es hat einen zentralen Aufnahmeraum 2 für eine Antriebswelle 3, auf der drehfest eine Exzenterscheibe 4 sitzt. Das freie Ende der Antriebswelle 3 ist drehbar in einem Lager 5 abgestützt, das an der Innenwand des Gehäuses 1 vorgesehen ist. Die Antriebswelle 3 ragt durch eine Befestigungsplatte 6 aus dem Aufnahmeraum 2 sowie aus dem Gehäuse 1. An der Befestigungsplatte 6, welche den Aufnahmeraum 2 nach außen verschließt, ist ein Elektromotor 7 befestigt, dessen Motorwelle die Antriebswelle 3 ist und mit dem die Exzenterscheibe 4 beim Betrieb der Pumpe gedreht wird.

Im Aufnahmeraum 2 sind Schmierstoffe für die Antriebswelle 3 und die Exzenterscheibe 4 untergebracht. Je nach Ausführung kann auch eine Trockenschmierung zum Einsatz kommen. In Fig. 1 nicht dargestellt sind Be- und Entlüftungsöffnungen für den Aufnahmeraum 2.

Die Exzenterscheibe 4 wirkt mit zwei diametral einander gegenüberliegenden Betätigungsstößeln 8, 9 zusammen, die Bestandteil jeweils eines Pumpenelementes 10, 11 sind. Beide Pumpenelemente 10, 11 haben jeweils einen Hohlkolben 12, 13, der in Richtung auf die Exzenterscheibe 4 offen ist. Der Betätigungsstößel 8, 9 ist mit einem Boden 14, 15 des Hohlkolbens 12, 13 verbunden, vorzugsweise einstückig mit ihm ausgebildet. Der Mantel des Hohlkolbens 13, 14 umgibt mit Abstand den Betätigungsstößel 8, 9. Am freien Ende ist der Hohlkolben 12, 13 mit einem nach außen ragenden Radialflansch 16, 17 versehen. Er ist im Vergleich zur Wand des Hohlkolbens 12, 13 verdickt ausgebildet und dient als Anschlag für einen den Hohlkolben 12, 13 umgebenden Federbalg 18, 19. Er besteht aus metallischem Werkstoff, so dass er eine lange Lebensdauer und lange Dauerfestigkeit aufweist. Der Federbalg 18, 19 ist mit Abstand von wenigstens einer Druckfeder 20, 21 umgeben, die sich mit einem Ende ebenfalls am Radialflansch 16, 17 abstützt. Das andere Ende der Druckfeder 20, 21 liegt an einem Anschlagring 22, 23 an, der den Hohlkolben 12, 13 im Bereich seines Bodens 14, 15 mit Abstand umgibt.

Abweichend vom dargestellten Ausführungsbeispiel kann der Hohlkolben 12, 13 im Anschlagring 22, 23 auch geführt sein.

Die Pumpenelemente 10, 11 haben jeweils einen buchsenförmigen Gehäuseteil 24, 25. Er weist an dem von der Exzenterscheibe 4 abgewandten Ende einen radial nach außen gerichteten Ringflansch 26, 27 und an seinem der Exzenterscheibe 4 zugewandten Ende einen radial nach innen gerichteten Ringflansch 28, 29 auf. Die Ringflansche 26, 27 haben größere Dicke als die Ringflansche 28, 29. Die Ringflansche 26, 27 sind axial zwischen Gehäuseteilen 30, 31 bzw. 30, 32 eingespannt.

Die Ringflansche 28, 29 bilden Anschläge, an denen die Hohlkolben 12, 13 mit ihren Radialflanschen 16, 17 unter der Kraft des jeweiligen Federbalges 18, 19 und der Druckfeder 20, 21 anliegen. Im Anschluss an den Ringflansch 28, 29 ist an der Innenseite des Hohlkolbens 12, 13 ein Gleitlager 33, 34 vorgesehen, das dafür sorgt, dass der Hohlkolben 12, 13 beim Fördern des Mediums zuverlässig verschoben werden kann.

Der Gehäuseteil 24, 25 liegt mit einem zylindrischen Mantel 35, 36 an der Innenseite des Gehäuseteiles 30 an. Die Gehäuseteile 24, 25 sind auf diese Weise durch die Ringflansche 26, 27 in axialer Richtung und durch ihre Anlage am Gehäuseteil 30 in radialer Richtung einwandfrei ausgerichtet. Die Gehäuseteile 24, 25, 30 bis 32 ermöglichen einen einfachen Zusammenbau der Pumpe.

Der Mantel 35, 36 der Gehäuseteile 24, 25 weist an seiner Innenseite etwa in Höhe des Ringflansches 26, 27 einen umlaufenden Absatz 37, 38 auf, an dem der Anschlagring 22, 23 mit einer umlaufenden Schulterfläche 39, 40 anliegt.

Die Gehäuseteile 31, 32 sind mit einem ringförmigen Vorsprung 41, 42 versehen, an dem der Anschlagring 22, 23 anliegt. Damit sind die Anschlagringe 22, 23 axial zwischen den Absätzen 37, 38 der Gehäuseteile 24, 25 und dem Vorsprung 41, 42 der Gehäuseteile 31, 32 gesichert.

Die Vorsprünge 41, 42 der beiden Gehäuseteile 31, 32 stehen mittig über die Stirnseite der Gehäuseteile 31, 32 vor und dienen gleichzeitig zur radialen Ausrichtung der Gehäuseteile 31, 32 gegenüber dem zwischen ihnen befindlichen Gehäuseteil 30. Die Vorsprünge 41, 42 und die Anschlagringe 22, 23 liegen jeweils abgedichtet an der Innenwand der Gehäuseteile 24, 25 im Bereich der Ringflansche 26, 27 an.

Die beiden ringförmigen Vorsprünge 41, 42 begrenzen radial nach außen jeweils einen Aufnahmeraum 43, 44 für das zu pumpende Medium. Die Aufnahmeräume 43, 44 werden durch einen ebenen Boden 45, 46 axial begrenzt.

In den Boden 45, 46 der Aufnahmeräume 43, 44 münden jeweils zwei axiale Bohrungen 47, 48; 49, 50. Die Bohrungen 47 bis 50 werden durch Ventilkörper 51 bis 54 geschlossen, die im Ausführungsbeispiel unter Federkraft stehende Ventilkugeln sind. Die Bohrungen 47 bis 50 zusammen mit Ventilkörpern 51 bis 54 bilden Rückschlagventile, die Druckventile 47, 51; 50, 54 und Saugventile 48, 52; 49, 53 bilden.

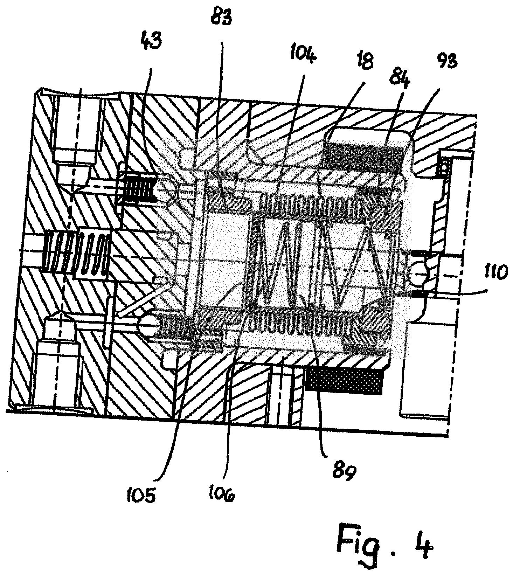

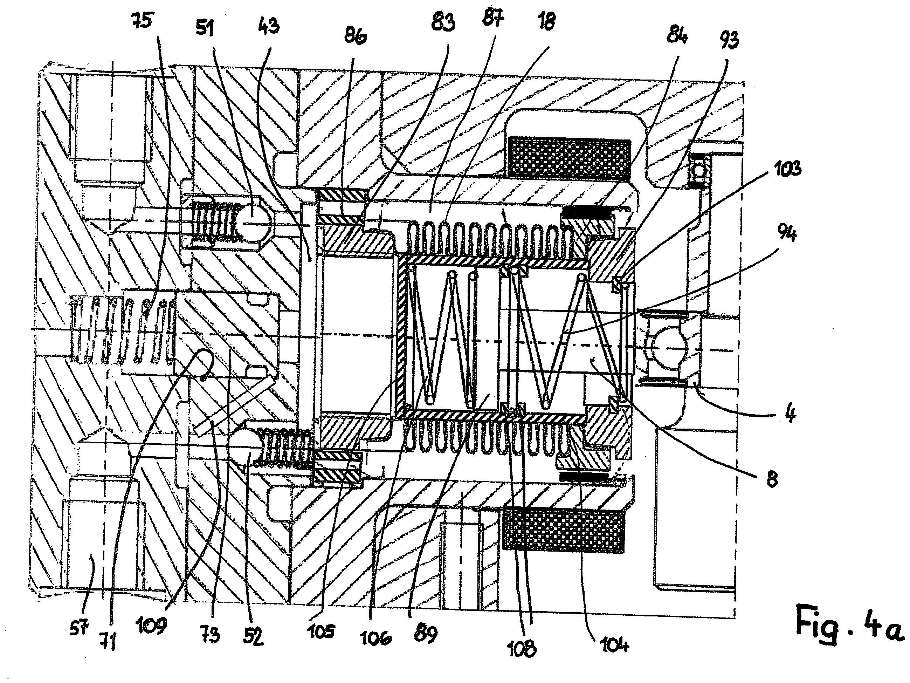

Die Bohrungen 47, 50 sind an Druckanschlüsse 55, 56 und die Bohrungen 48, 49 an Sauganschlüsse 57, 58 angeschlossen. Die Sauganschlüsse 57, 58 sind an einen Tank 59 angeschlossen, in dem sich das zu pumpende Medium befindet. Über die Druckanschlüsse 55, 56 wird das Medium einem Einspritzinjektor 60 (Fig. 4) zugeführt, mit dem das Medium in bekannter Weise in den Abgasstrang des Fahrzeuges eingespritzt wird.

Die Federbalge 18, 19 umgeben den Hohlkolben 12, 13 jeweils mit Spiel. Dadurch wird zwischen dem Federbalg 18, 19 und dem Hohlkolben 12, 13 ein Aufnahmeraum 61, 62 gebildet, der mit dem Aufnahmeraum 43, 44 in leitender Verbindung ist. Die beiden Federbälge 18, 19 sind nach außen abgedichtet, so dass das in den Aufnahmeräumen 61, 62 befindliche Medium nicht entweichen kann.

Die Exzenterscheibe 4 wird mittels des Elektromotors 7 gedreht. Hierbei werden über die Betätigungsstößel 8, 9 die Hohlkolben 12, 13 bei entsprechender Winkellage der Exzenterscheibe gegen die Kraft des Federbalges 18, 19 sowie der Druckfeder 20, 21 verschoben. In umgekehrter Richtung werden die Hohlkolben 12, 13 durch die Kraft der Federbälge 18, 19 und der Druckfeder 20, 21 stets so belastet, dass die Betätigungsstößel 8, 9 am Umfang der Exzenterscheibe 4 anliegen. Die Ringflansche 28, 29 der Gehäuseteile 24, 25 begrenzen die Axialbewegung der Hohlkolben 12, 13 in Richtung auf die Exzenterscheibe 4.

Die beiden Rückschlagventile jedes Pumpenelementes 10, 11 sind so angeordnet, dass das eine Rückschlagventil bei Druckbeaufschlagung und das andere Rückschlagventil bei Saugbeanspruchung die zugehörige Leitung schließt.

Wird der Hohlkolben 12 des in Fig. 1 linken Pumpenelementes 10 aus der gezeichneten Anschlagstellung nach links verschoben, wird das in den Aufnahmeräumen 45, 61 befindliche Medium unter Druck gesetzt. Dies hat zur Folge, dass der Ventilkörper 51 gegen Federkraft vom Ventilsitz abhebt, so dass das Medium über die Bohrung 47 in den Druckanschluss 55 gelangen kann. Der Ventilkörper 52 wird infolge des auf das Medium ausgeübten Druckes in den Ventilsitz gedrückt, wodurch der Ventilkörper 52 den Sauganschluss 57 schließt.

In gleicher Weise wird beim rechten Pumpenelement 11 beim Verfahren des Hohlkolbens 13 nach rechts der Ventilkörper 54 in seine Freigabestellung verstellt, so dass das in den Aufnahmeräumen 46, 62 befindliche Medium über die Bohrung 50 in den Druckanschluss 56 gelangen kann. Der andere Ventilkörper 49 wird durch den Mediumsdruck in seinen Ventilsitz gedrückt, so dass der Sauganschluss 58 geschlossen wird.

Werden die Hohlkolben 12, 13 wieder zurück in ihre Anschlagstellung verschoben, dann entsteht in den Aufnahmeräumen 43, 61; 44, 62 ein Unterdruck, der dazu führt, dass der Ventilkörper 52, 53 vom Ventilsitz abhebt, so dass der Sauganschluss 57, 58 freigegeben wird. Das Medium wird somit aus dem Tank 59 in die Aufnahmeräume 43, 61; 44, 62 gesaugt. Durch den Unterdruck werden die Ventilkörper 51, 54 unter Federkraft in ihre Ventilsitze gedrückt, so dass die Druckanschlüsse 55, 56 während des Saugbetriebes gesperrt sind.

Auf die beschriebene Weise werden abwechselnd die Sauganschlüsse 57, 58 bzw. die Druckanschlüsse 55, 56 geöffnet und geschlossen. Während des Saugbetriebes sperren die Ventilkörper 51, 54 die Druckanschlüsse 55, 56, während die Ventilkörper 52, 53 die Sauganschlüsse 57, 58 schließen, wenn das zu fördernde Medium durch die Hohlkolben 12, 13 unter Druck gesetzt wird.

Die auf die Ventilkörper 51 bis 54 wirkende Federkraft ist so auf die Druckverhältnisse auf die Pumpe abgestimmt, dass die Ventilkörper die entsprechenden Druck- und Sauganschlüsse zuverlässig schließen bzw. öffnen. Die Rückschlagventile der beiden Pumpenelemente 10, 11 werden vorteilhaft abwechselnd betätigt. An die Druckanschlüsse 55, 56 sind Druckleitungen 55a, 56a angeschlossen, die zusammengeführt sind. Die Druckleitungen 55a, 56a können externe Leitungen sein. Es ist aber auch möglich, die Druckleitungen 55a, 56a durch Bohrungen im Gehäuse 1 zu bilden. In gleicher Weise können auch die an die Sauganschlüsse 57, 58 angeschlossenen Saugleitungen 57a, 58a externe Leitungen oder im Gehäuse befindliche Bohrungen sein.

Der Druckanschluss 55 und der Sauganschluss 57 sind in einem Gehäuseteil 63 und der Druckanschluss 56 und der Sauganschluss 58 in einem Gehäuseteil 64 vorgesehen. Beide Gehäuseteile 63, 64 sind etwa quaderförmig ausgebildet und liegen mit ihren einander zugewandten Stirnseiten flächig an den Gehäuseteilen 31, 32 an und sind in geeigneter Weise, vorzugsweise über Schrauben, fest mit diesen Gehäuseteilen verbunden.

Sämtliche Gehäuseteile sind vorteilhaft so ausgebildet, dass sie eine gemeinsame Außenseite des Gehäuses 1 bilden. Das Gehäuse 1 und somit auch die gesamte Pumpe wird aus einzelnen Modulen zusammengebaut, so dass je nach Anwendungsfall unterschiedliche Arten von Pumpen erstellt werden können.

Die Pumpe arbeitet, wie zuvor beschrieben worden ist, in der Weise, dass durch Zurückziehen des Federbalges 18, 19 das Medium aus dem Tank 59 angesaugt wird. Das Zurückziehen des Federbalges 18, 19 wird durch die Druckfeder 20, 21 eingeleitet, die so ausgebildet ist, dass der Betätigungsstößel 8, 9 der beiden Pumpenelemente 10, 11 stets in Kontakt mit der Exzenterscheibe 4 ist. Die Schmierung der mechanischen Antriebskomponente kann durch eine Sumpf- oder eine Trockenschmierung erreicht werden.

Der Antrieb der Pumpe erfolgt vorzugsweise über den Elektromotor 7, der vorteilhaft ein bürstenloser Elektromotor ist, der eine hohe Lebensdauer gewährleistet. Sofern keine hohe Lebensdauer erforderlich ist, kann der Elektromotor 7 auch mit Bürsten ausgestattet sein.

Der Elektromotor 7 ist vorteilhaft stufenlos regelbar. Dann kann die Fördermenge des Mediums variabel eingestellt werden. Die Fördermenge kann so angepasst werden, dass die Einspritzinjektoren 60 bedarfsabhängig geregelt werden können. Dadurch kann Antriebsenergie gespart und die Lebensdauer der Pumpe verlängert werden. Die Exzenterscheibe 4 kann abweichend vom dargestellten und beschriebenen Ausführungsbeispiel auch direkt vom Verbrennungsmotor des Fahrzeuges angetrieben werden.

Durch die Kompression des Federbalges 18, 19 wird das Volumen des Aufnahmeraumes 61, 62, das vom Federbalg 18, 19 umschlossen ist, verringert und somit das Medium über das geöffnete Ventil in den Druckanschluss 55, 56 gedrückt. Während dieser Druckphase sind die Sauganschlüsse 57, 58 durch die entsprechenden Ventile geschlossen.

Die beiden Gehäuseteile 63, 64 sind an ihrer Anlageseite mit jeweils zwei Vertiefungen 65, 66; 67, 68 versehen. Sie liegen in Höhe der Ventilkörper 51 bis 54. In den Vertiefungen 65, 68 liegt ein Dichtungsring 69, 70, mit dem die beiden Gehäuseteile 31, 63 und 32, 64 im Bereich dieser Vertiefungen gegeneinander abgedichtet sind.

Die Pumpe ist mit einer Einrichtung versehen, die bei einem Einfrieren des zu pumpenden Mediums eine Beschädigung der Pumpenkomponenten verhindert. Die Gehäuseteile 31, 32 sind mit einer zentralen Bohrung 71, 72 versehen. In den Bohrungen 71, 72 ist abgedichtet ein Ausgleichskolben 73, 74 gelagert, der in Richtung auf die Pumpenelemente 10, 11 durch wenigstens eine Druckfeder 75, 76 belastet ist. Sie liegt innerhalb einer zentralen Bohrung 77, 78 des Gehäuseteiles 63, 64. Die Bohrungen 71, 72 und 77, 78 haben gleichen Durchmesser, so dass der Ausgleichskolben 73, 74 in beiden Bohrungen 71, 72; 77, 78 verschoben werden kann.

Die Druckfedern 75, 76 stützen sich mit ihrem vom Pumpenelement 10, 11 abgewandten Ende an einer Ringschulter 79, 80 in der Wandung der Bohrungen 77, 78 ab. Mit dem anderen Ende liegen die Druckfedern 75, 76 an den Ausgleichskolben 73, 74 an und drücken sie gegen einen Anschlag 81, 82, der durch einen radial nach innen gerichteten Ringflansch am Ende der Bohrung 71, 72 des Gehäuseteiles 31, 32 gebildet wird.

Die Bohrungen 71, 72 sind zu den Aufnahmeräumen 43, 44 offen. Die Bohrungen 77, 78 der Gehäuseteile 63, 64 sind zur Umgebung hin offen.

Sollte das im Aufnahmeraum 43, 44 befindliche Medium einfrieren, dann wird die Ausdehnung des gefrorenen Mediums dadurch abgefangen, dass die Ausgleichskolben 73, 74 gegen die Kraft der Druckfedern 75, 76 zurückgeschoben werden, wodurch der für das Medium zur Verfügung stehende Aufnahmeraum vergrößert wird. Dadurch werden die Pumpenteile beim Einfrieren des Mediums in den Aufnahmeräumen 43, 44 sicher vor Beschädigung geschützt.

Die Kraft der Druckfedern 75, 76 wird so eingestellt, dass die Ausgleichskolben 73, 74 bei normalem Betrieb der Pumpe nicht verschoben werden. Vorteilhaft wird die Federkraft auf etwa 20 % oberhalb des Betriebsdruckes der Pumpe eingestellt.

Der Ausgleichskolben 73, 74 kann auch als Druckbegrenzungsventil genutzt werden. In diesem Falle wirkt der Ausgleichskolben mit einer Verbindungsbohrung 109 zusammen (Fig. 4), die mit dem Sauganschluss 57, 58 in Verbindung gebracht werden kann. Die Druckfeder 75, 76 ist so ausgelegt, dass bei Erreichen eines vorgegebenen Höchstdruckes im Aufnahmeraum 43, 44 der Ausgleichskolben 73, 74 so weit verschoben ist, dass über die Verbindungsbohrung 109 der Aufnahmeraum 43, 44 mit dem Sauganschluss 57, 58 strömungsverbunden ist.

Der Ausgleichskolben 73, 74 kann auch die Druckschwingungen dämpfen, die beim Einsatz des Ventils auftreten können.

Die Betätigungsstößel 8, 9 der beiden Pumpenelemente 10, 11 haben jeweils einen etwa teilkalottenförmigen Kopf, mit dem sie an der Exzenterscheibe 4 anliegen. Dadurch wird eine zuverlässige Verstellung der Hohlkolben 12, 13 der Pumpenelemente 10, 11 gewährleistet.

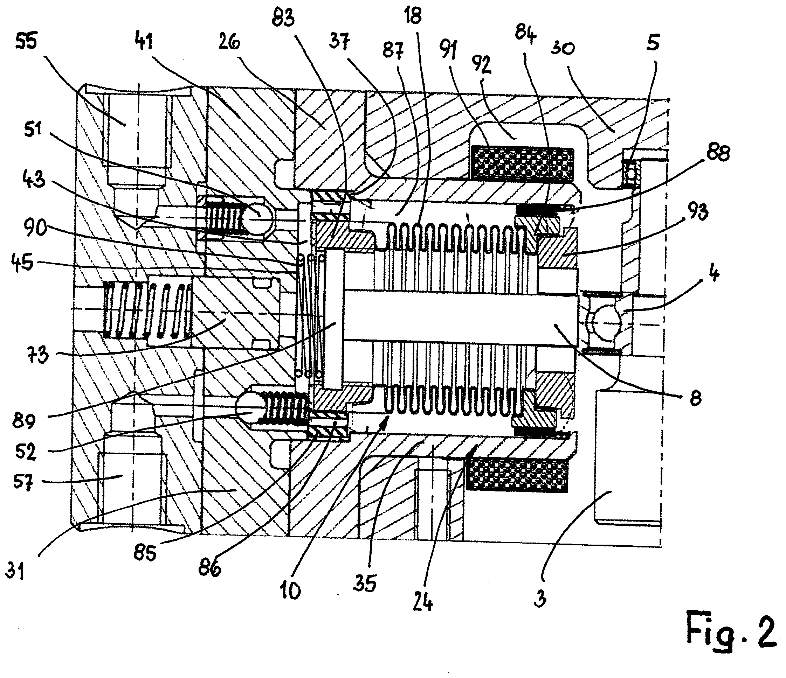

Bei der Ausführungsform gemäß Fig. 2 ist nur die eine Hälfte der Pumpe dargestellt. Die andere Hälfte ist entsprechend der vorigen Ausführungsform spiegelsymmetrisch in Bezug auf die Achse der Exzenterscheibe 4 ausgebildet. Sie sitzt wie bei der vorigen Ausführungsform drehfest auf der Antriebswelle 3.

Das Pumpenelement 10 hat den Hohlkolben 12, dessen Mantel vom Federbalg 18 gebildet wird. Seine beiden Enden sind mediumsdicht mit jeweils einem Verbindungsring 83, 84 verbunden. Der Verbindungsring 83 wird von einem ringförmigen Führungselement 85 umgeben, das abgedichtet an der Innenwand des Ringflansches 26 des Gehäuseteiles 24 anliegt. Das Führungselement 85 weist wenigstens eine, vorzugsweise mehrere über seinen Umfang verteilt angeordnete Durchgangsöffnungen 86 auf. Sie verbinden den Aufnahmeraum 43 mit einem den Federbalg 18 umgebenden Druckraum 87, der radial nach außen durch den Mantel 35 des Gehäuseteiles 24 begrenzt ist.

Das Führungselement 85 ist axial gesichert zwischen dem ringförmigen Absatz 37 des Gehäuseteiles 24 und dem ringförmigen Vorsprung 41 des Gehäuseteiles 31 gelagert.

Der Verbindungsring 84 wird von einem Dichtring 88 umgeben, der dichtend an der Innenwand des Mantels 35 des Gehäuseteiles 24 anliegt und den Druckraum 87 in Richtung auf die Exzenterscheibe 4 abdichtet.

Der Verbindungsring 83 sitzt unverschieblich auf dem Umfang einer Scheibe 89, die an einem Ende des Betätigungsstößels 8 befestigt ist. Er steht zentrisch von der Scheibe 89 an und liegt unter der Kraft einer Druckfeder 90 an der Exzenterscheibe 4 an. Die Druckfeder 90 liegt im Aufnahmeraum 43 und stützt sich mit einem Ende am Boden 45 des Aufnahmeraumes 43 und mit dem anderen Ende an der Unterseite der Scheibe 89 ab.

Auf der Außenseite des Mantels 35 des Gehäuseteiles 24 sitzt ein Heizelement 91, das über den Umfang des Mantels 35 verläuft und etwa in Höhe des Verbindungsringes 84 vorgesehen ist. Der mittlere Gehäuseteil 30 ist im Bereich des Heizelementes 91 mit einer Ringnut 92 versehen, in die das Heizelement 91 ragt. Mit dem Heizelement 91 kann das in der Druckkammer 87 befindliche Medium erwärmt werden.

Das Heizelement 91 kann auch beim Ausführungsbeispiel gemäß Fig. 1 sowie bei den weiteren Ausführungsformen vorgesehen sein.

Der benachbart zur Exzenterscheibe 4 liegende Verbindungsring 84 sitzt auf einem feststehenden Befestigungsring 93, mit dem er fest verbunden ist. Der Befestigungsring 93 umgibt den Betätigungsstößel 8 mit Abstand und führt ihn axial durch radial verlaufende Stege beim Verschieben. Der Befestigungsring 93 dichtet das Medium nach außen ab.

Wird der Betätigungsstößel 8 durch die Exzenterscheibe 4 in Fig. 2 nach links verschoben, wird der Verbindungsring 83 nach links verschoben, wodurch der Federbalg 18 gedehnt wird. Das im Aufnahmeraum 43 befindliche Medium wird unter Druck gesetzt, wodurch der Ventilkörper 51 aus seinem Ventilsitz gedrückt wird. Das unter Druck stehende Medium kann somit zum Druckanschluss 55 und von dort in die Druckleitung strömen. Die Ventilkugel 52 wird durch das unter Druck stehende Medium in seinen Ventilsitz gepresst, so dass der Sauganschluss 57 gesperrt ist. Über die Öffnungen 86 des Verbindungsringes 83 wird auch das im Druckraum 87 befindliche Medium unter Druck gesetzt.

Beim Weiterdrehen der Exzenterscheibe 4 wird der Betätigungsstößel 8 unter der Kraft der Druckfeder 90 in Fig. 2 nach rechts verschoben, wobei der Verbindungring 83 mitgenommen wird. Der Federbalg 18 kann sich entspannen, wodurch im Druckraum 87 sowie im Aufnahmeraum 43 ein Unterdruck erzeugt wird. Er sorgt dafür, dass der Ventilkörper 52 vom Ventilsitz abhebt und den Sauganschluss 57 öffnet. Somit kann das Medium aus dem Tank 59 (Fig. 1) angesaugt werden. Der auf den Ventilkörper 51 wirkende Federdruck ist so groß, dass beim Ansaugen des Mediums der Ventilkörper 51 in die Sperrstellung verstellt wird, so dass der Druckanschluss 55 gesperrt wird.

Im Übrigen ist die Pumpe gemäß Fig. 2 gleich ausgebildet wie die Ausführungsform gemäß Fig. 1. Die Pumpe hat ebenfalls eine Einrichtung, um beim Einfrieren des Mediums eine Beschädigung der Pumpenteile zu vermeiden. Diese Einrichtung hat den Ausgleichskolben 73, der entsprechend der vorigen Ausführungsform ausgebildet und angeordnet ist. Das Heizelement 91, das vorteilhaft ein umlaufendes Heizband ist, trägt dazu bei, das Medium auch bei tiefen Außentemperaturen flüssig zu halten. Das Heizelement 91 dient auch zur schnelleren Betriebsfähigkeit. Ist das System eingefroren, wird durch das Auftauen der Harnstoff in kurzer Zeit zur Verfügung gestellt. Dadurch steht die NOx-Reduzierung schnell zur Verfügung.

Die Pumpe gemäß Fig. 2 kann auch so ausgebildet sein, dass der Befestigungsring 93 zusammen mit dem Verbindungsring 84 verschoben wird, während der Verbindungsring 83 feststeht. Bei einer solchen Ausbildung kann der Betätigungsstößel 8 entfallen.

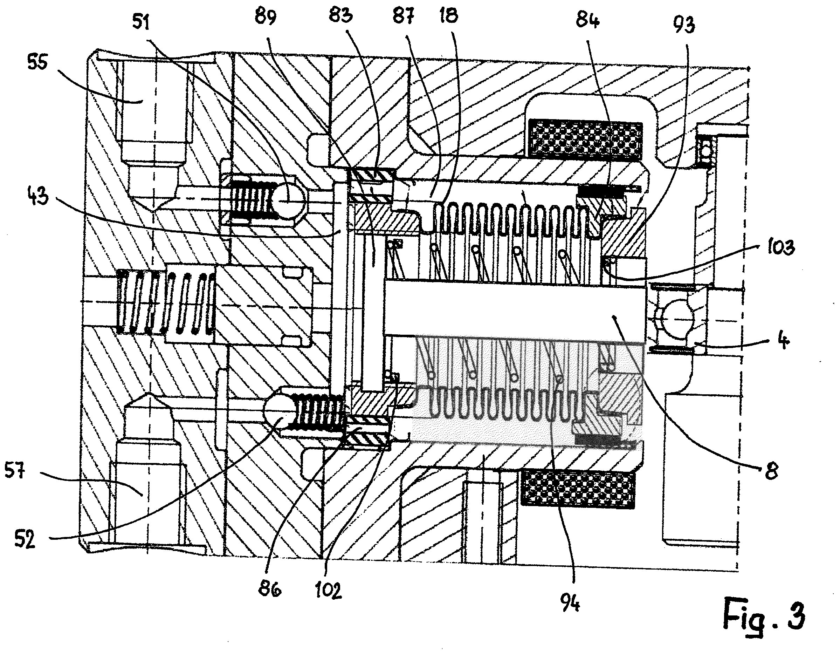

Die Pumpe gemäß Fig. 3 (nur eine Hälfte dargestellt) unterscheidet sich von der Pumpe nach Fig. 2 lediglich dadurch, dass sie anstelle der Druckfeder 90 eine Zugfeder 94 aufweist. Sie wird vom Federbalg 18 mit Abstand umgeben und ist so ausgelegt, dass sie den Betätigungsstößel 8 stets gegen die Exzenterscheibe 4 zieht. Hierzu ist das der Exzenterscheibe 4 benachbarte Ende der Zugfeder 94 am Befestigungsring 93 befestigt. Das andere Ende der Zugfeder 94 ist an der Scheibe 89 befestigt. Die Zugfeder 94 sorgt wie die Druckfeder 90 der vorigen Ausführungsform dafür, dass der Betätigungsstößel 8 stets in Anlage am Umfang der Exzenterscheibe 4 anliegt. Zur Aufnahme der Federkräfte ist an den beiden Enden der Zugfeder 94 vorteilhaft jeweils ein Sicherungsring 102, 103 vorgesehen.

Wird der Betätigungsstößel 8 durch die Exzenterscheibe 4 in Fig. 3 nach links bewegt, dann wird der Verbindungsring 83 mitgenommen, wodurch das im Aufnahmeraum 43 und über die Öffnungen 86 des Verbindungsringes 83 im Druckraum 87 befindliche Medium unter Druck gesetzt wird. Das Druckventil mit dem Ventilkörper 51 wird hierdurch geöffnet, so dass das Medium in den Druckanschluss 55 gelangen kann. Gleichzeitig wird der Ventilkörper 52 des Ansaugventiles in seine Schließstellung gedrückt, so dass der Sauganschluss 57 gesperrt ist.

Bei dieser Verschiebebewegung des Betätigungsstößels 8 wird die Zugfeder 94 gedehnt. Auch der Federbalg 18 dehnt sich.

Sobald beim Drehen der Exzenterscheibe 4 der Betätigungsstößel 8 in Fig. 3 wieder nach rechts bewegt werden kann, zieht die Zugfeder 94 über die Scheibe 89 den Betätigungsstößel 8 nach rechts. Der Verbindungsring 83 wird hierbei mitgenommen. Der Federbalg 18 zieht sich entsprechend zusammen. Durch den durch die Vergrößerung des Aufnahmeraumes 43 entstehenden Unterdruck wird das Druckventil 51 geschlossen und das Ansaugventil 52 geöffnet, so dass Medium vom Tank 59 angesaugt werden kann.

Auch bei dieser Ausführungsform kann der Befestigungsring 93 zusammen mit dem Verbindungsring 84 verschiebbar sein, während der Verbindungsring 83 feststeht. Der Betätigungsstößel 8 kann in diesem Fall entfallen.

Im Übrigen ist diese Ausführungsform gleich ausgebildet wie das Ausführungsbeispiel gemäß Fig. 2.

Fig. 4 und 4a (nur eine Hälfte dargestellt) zeigen ein Ausführungsbeispiel einer Pumpe, die die grundsätzliche Ausbildung entsprechend Fig. 2 hat, bei der die Druckerzeugung außen am Federbalg 18 erfolgt. Diese Pumpe ist zusätzlich mit einem Gefrierschutz für den Federbalg 18 versehen. Er ist mit dem einen Ende am Verbindungsring 83 und am anderen Ende mit dem Verbindungsring 84 verbunden, der in der beschriebenen Weise auf dem Befestigungsring 93 sitzt, der verschiebefest in der Pumpe angeordnet ist.

Der Federbalg 18 umgibt eine Hülse 104, innerhalb der die Scheibe 89 verschiebbar ist. An ihrem dem Ausgleichskolben 73 zugewandten Ende ist die Hülse 104 durch eine Scheibe 105 geschlossen. Zwischen dieser Schließscheibe 105 und der Scheibe 89 ist in der Hülse 104 eine Druckfeder 106 untergebracht, die sich mit ihren beiden Enden an der Endscheibe 105 und an der Scheibe 89 abstützt. Die Vorspannkraft der Druckfeder 106 ist größer als der Betriebsdruck der Pumpe. Dadurch muss die Druckfeder 106 im Normalbetrieb keine Hubarbeit leisten.

Auf der anderen Seite der Scheibe 89 befindet sich die Zugfeder 94, deren der Scheibe 89 benachbartes Ende zwischen zwei Sicherungsringen 108 axial festgelegt ist. Das andere Ende der Zugfeder 94 ist am Sicherungsring 103 axial abgestützt, der entsprechend dem Ausführungsbeispiel gemäß Fig. 3 an der Innenseite des Befestigungsringes 93 angeordnet ist. Die Zugfeder 94 umgibt entsprechend der vorigen Ausführungsform den mit der Scheibe 89 fest verbundenen Betätigungsstößel 8 mit Abstand. Der Betätigungsstößel 8 liegt mit seinem freien Ende an der Exzenterscheibe 4 in der beschriebenen Weise an.

Wird der Betätigungsstößel 8 beim Drehen der Exzenterscheibe 4 in Fig. 4 nach links bewegt, wird über die Druckfeder 106 und die Endscheibe 105 der Verbindungsring 83 axial nach links verschoben, wodurch das im Aufnahmeraum 43 befindliche Medium unter Druck gesetzt wird. Über die Durchlassbohrungen 86 im Verbindungsring 83 wird auch das im Druckraum 87 befindliche Medium unter Druck gesetzt. Da die Vorspannkraft der Druckfeder 106 größer ist als der Betriebsdruck, wirkt die Druckfeder 106 als starres Element zwischen der Scheibe 89, der Endscheibe 105 und dem Verbindungsring 83.

Wie anhand der vorigen Ausführungsformen beschrieben, wird durch das unter Druck stehende Medium der Ventilkörper 51 aus seinem Ventilsitz, während der Ventilkörper 52 in seinen Ventilsitz gedrückt wird.

Wird die Exzenterscheibe 4 weiter gedreht, wird die Hülse 104 zusammen mit der Scheibe 89 durch die Zugfeder 94 zurückgezogen, wodurch sich der Federbalg 18 entspannt. Die Scheibe 89 wird durch die Druckfeder 106 in Richtung auf den Sicherungsring 108 belastet. Durch den durch die Vergrößerung des Aufnahmeraumes 43 entstehenden Unterdruck wird das Druckventil 51 in der beschriebenen Weise geschlossen und das Ansaugventil 52 geöffnet, so dass das Medium vom Tank 59 angesaugt werden kann. Auch bei dieser Rückzugsphase wirkt die Druckfeder 106 als starres Bauteil zwischen der Endscheibe 105, der Hülse 104 bzw. dem Verbindungsring 83.

Die Druckfeder 106 bildet einen Gefrierschutz, durch den verhindert wird, dass der Federbalg 18 beim Einfrieren des Mediums beschädigt wird. Sollte das im Aufnahmeraum 43 befindliche Medium gefrieren und sich dementsprechend ausdehnen, kann die Druckfeder 106 die Ausdehnung des gefrorenen Mediums aufnehmen, indem sie sich elastisch verformt. Dies hat zur Folge, dass der Federbalg 18 sich in Richtung auf die Exzenterscheibe 4 bewegen kann, wodurch eine Beschädigung des Federbalges 18 zuverlässig vermieden wird. Die Vorspannung der Druckfeder 106 ist so eingestellt, dass sie einerseits höher als der normale Betriebsdruck, jedoch kleiner als die beim Einfrieren des Mediums entstehenden Kräfte ist.

Fig. 4 zeigt die Lage der Hülse 104, wenn das im Aufnahmeraum 43 befindliche Medium nicht gefroren ist. Dann hat die Hülse 104 vom Befestigungsring 93 einen axialen Abstand. Zwischen der Stirnseite der Hülse 104 und dem Befestigungsring 93 wird auf diese Weise ein Ausgleichsraum 110 gebildet.

Solle das Medium im Aufnahmeraum 43 gefrieren, dann dehnt es sich aus. Die Scheibe 105, die einstückig mit der Hülse 104 ausgebildet sein kann, wird dadurch druckbelastet. Der durch das Einfrieren entstehende Druck ist größer als der Druck der Druckfeder 106, die dadurch elastisch zusammengedrückt wird. Die Hülse 104 gleitet über die Scheibe 89 hinweg. Auf diese Weise kann die Volumenvergrößerung des Mediums beim Gefrieren aufgefangen werden, ohne dass der Federbalg 18 beschädigt wird. Die Hülse 104 ist mit dem Federbalg 18 und damit auch mit dem Verbindungsring 83 verbunden, um die Hubkräfte auf den Federbalg 18 zu übertragen. Die Hülse 104 kann technisch auch direkt mit dem Verbindungsring 83 verbunden sein. Dies führt zu einer weiteren Reduzierung des Totvolumens im Aufnahmeraum 43, wenn die Scheibe 105 am linken Ende des Verbindungsringes 83 angebracht ist. Beim Verschieben wird die Hülse 104 im Verbindungsring 84 geführt.

Fig. 4a zeigt die Hülse 104 in ihrer am weitesten verschobenen Lage, in der sie am Befestigungsring 93 mit ihrer Stirnseite anliegt. Die Größe des Ausgleichsraumes 110 bzw. der axiale Abstand zwischen der Stirnseite der Hülse 104 und dem Befestigungsring 93 ist so gewählt, dass auf jeden Fall die beim Einfrieren des Mediums im Aufnahmeraum 43 entstehende Volumenvergrößerung aufgefangen werden kann.

Mit Hilfe der Druckfeder 106 können auch während des Betriebes auftretende hydraulische Druckspitzen abgebaut werden, welche den Federbalg 18 beschädigen könnten.

Der beschriebene Gefrierschutz für den Federbalg 18 kann, wie bei der beschriebenen Ausführungsform, bei einer Pumpe vorgesehen sein, bei der die Druckerzeugung außen am Federbalg 18 erfolgt. Der Gefrierschutz kann aber auch bei Pumpen vorgesehen sein, bei denen die Druckerzeugung innerhalb des Federbalges 18 erfolgt, wie beispielhaft anhand von Fig. 1 beschrieben worden ist.

Fig. 4a zeigt die im Zusammenhang mit Fig. 1 erwähnte Verbindungsbohrung 109, die den Sauganschluss 57 mit der Bohrung 71 verbindet, in der der Ausgleichskolben 73 untergebracht ist. Die den Ausgleichskolben 73 belastende Druckfeder 75 ist so ausgelegt, dass bei Erreichen des vorgegebenen Höchstdruckes im Aufnahmeraum 43 der Ausgleichskolben 73 so weit verschoben ist, dass der Aufnahmeraum 43 über die Verbindungsbohrung 109 mit dem Sauganschluss 57 strömungsverbunden ist.

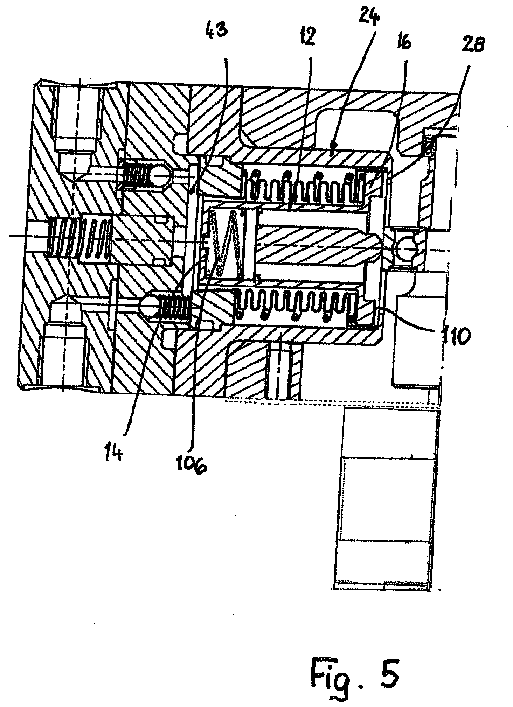

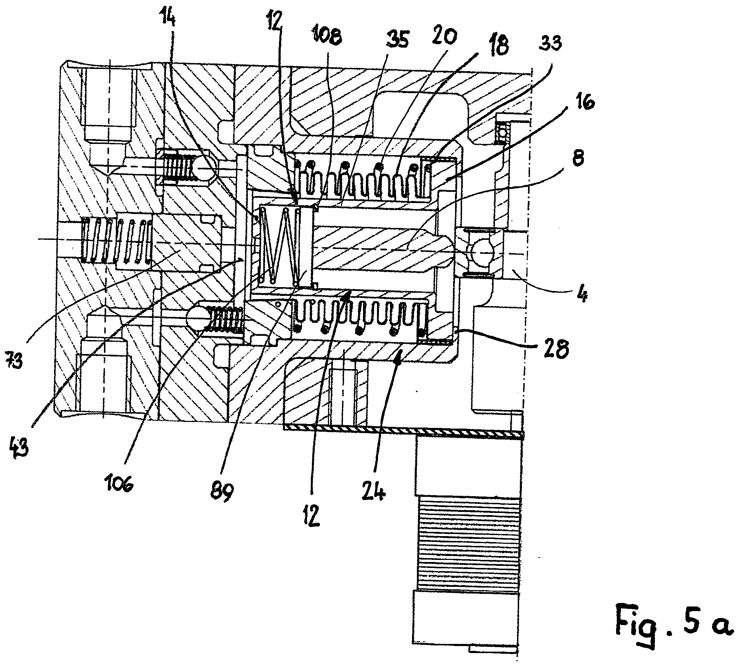

Fig. 5 und 5a (nur eine Hälfte der Pumpe dargestellt) zeigen eine Pumpe, bei der die Druckerzeugung innerhalb des Federbalges 18 erfolgt. Die Pumpe hat grundsätzlich die gleiche Ausbildung wie das Ausführungsbeispiel gemäß Fig. 1. An der Innenseite des Mantels 35 befindet sich der Sicherungsring 108, der entsprechend der vorigen Ausführungsform in eine Ringnut in der Innenseite des Mantels 36 eingreift. An der dem Boden 14 des Hohlkolbens 12 zugewandten Seite des Sicherungsringes 108 liegt die Scheibe 89 unter der Kraft der Druckfeder 106 an. Sie stützt sich mit ihrem anderen Ende am radialen Boden 14 des Hohlkolbens 12 ab. Entsprechend der vorigen Ausführungsform ist die Vorspannkraft der Druckfeder 106 größer als der Druck im Normalbetrieb der Pumpe. Darum verhält sich die Druckfeder 106 wie ein steifes Bauteil, wenn die Pumpe im Normalbetrieb arbeitet. Wird der Betätigungstößel 8 durch die Exzenterscheibe 4 in Fig. 5 nach links verschoben, wird der Hohlkolben 12 unter elastischem Zusammenziehen des Federbalges 18 verschoben und das im Aufnahmeraum 43 befindliche Medium unter Druck gesetzt. Hierbei wird in der beschriebenen Weise die Druckfeder 20 elastisch zusammengedrückt. Beim weiteren Drehen der Exzenterscheibe 4 wird der Hohlkolben 12 durch die Druckfeder 20 wieder in Fig. 5 nach rechts verschoben. Die Druckfeder 106 wird beim Verschieben des Betätigungskolbens 8 nicht verformt.

Sollte das im Aufnahmeraum 43 befindliche Medium einfrieren, dehnt es sich aus. Diese Ausdehnung des gefrierenden Mediums wird durch entsprechende elastische Verformung der Druckfeder 106 aufgefangen, so dass der Federbalg 18 nicht beschädigt wird.

Ist das Medium im Aufnahmeraum 43 nicht eingefroren, hat der Radialflansch 16 des Hohlkolbens 12 axialen Abstand vom Ringflansch 28 des Gehäuseteiles 24 (Fig. 5). Dadurch wird zwischen dem Radialflansch 16 und dem Ringflansch 28 der Ausgleichsraum 110 gebildet. Sollte das Medium im Aufnahmeraum 43 einfrieren und dadurch auf den Boden 14 des Hohlkolbens 12 ein axialer Druck wirken, dann wird der Hohlkolben 12 axial nach rechts verschoben. Die Druckfeder 106 ist so eingestellt, dass ihr Druck kleiner als der Gefrierdruck, aber größer als der normale Betriebsdruck der Pumpe ist.

Fig. 5a zeigt den Hohlkolben 12 in der Endlage, in der sein Radialflansch 16 am Ringflansch 28 des Gehäuseteiles 24 anliegt. Der Radialflansch 16 wird am Gleitlager 33 axial geführt. Der axiale Abstand zwischen dem Radialflansch 16 und dem Ringflansch 28 und damit die Größe des Ausgleichsraumes 110 sind so gewählt, dass die beim Einfrieren des Mediums im Aufnahmeraum 43 auftretende maximale Volumenvergrößerung aufgefangen werden kann.

Wie beim vorigen Ausführungsbeispiel wirkt die Druckfeder 106 beim normalen Betrieb der Pumpe als starres Bauteil, da die Vorspannkraft der Druckfeder 106 größer ist als der normale Betriebsdruck. Die Druckfeder 106 wirkt als starres Element zwischen der Scheibe 89 und dem Boden 14 des Hohlkolbens 12.

Im Übrigen ist die Pumpe gemäß Fig. 5 gleich ausgebildet wie das Ausführungsbeispiel gemäß Fig. 1.

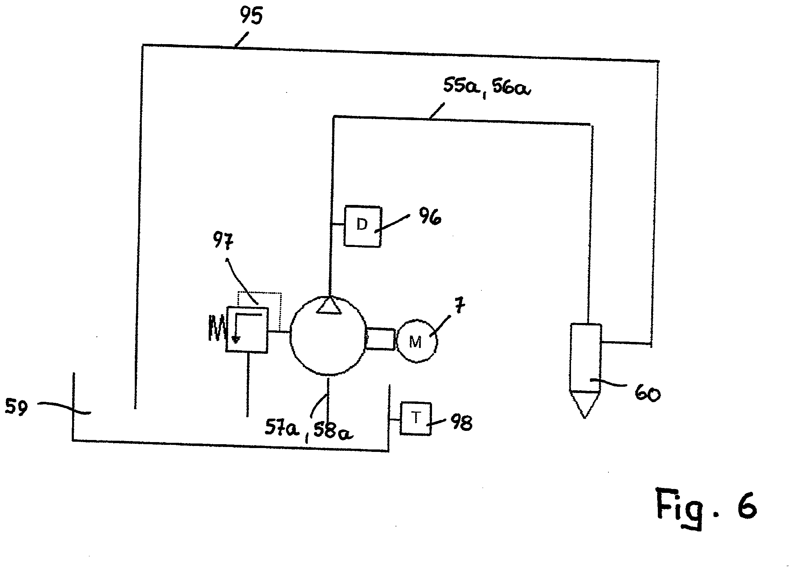

Anhand von Fig. 6 wird der Schaltplan des Pumpensystems beschrieben. Mit der Pumpe, die eine der zuvor beschriebenen Ausbildungen haben kann, wird das zu fördernde Medium über die Saugleitung 57a, 58a aus dem Tank 59 gesaugt. Die Pumpe wird mit dem Elektromotor 7 in der beschriebenen Weise angetrieben. Das Medium wird über die Druckleitung 55a, 56a dem Einspritzinjektor 60 zugeführt. Er ist über eine Rückführleitung 95 mit dem Tank 59 verbunden, so dass überschüssiges Medium über diese Rückführleitung 95 zum Tank 59 zurückgeführt werden kann. Das zurückgeführte Medium dient vor allem der Kühlung des Einspritzinjektors 60. Grundsätzlich hängt die Kühlung vom System ab. Nicht alle Einspritzinjektoren 60 benötigen eine Kühlung. Einige der Einspritzinjektoren 60 werden auch durch die umströmende Luft gekühlt. Die Kühlung mittels des Mediums ist optional.

In der Druckleitung 55a, 56a sitzt vorteilhaft ein Drucksensor 96, mit dem der Druck in der Druckleitung überwacht werden kann. Das Drucksignal dient zur Überwachung des Systems. Bei einem Druckeinbruch wird ein Warnhinweis erzeugt, beispielsweise in Form einer aufleuchtenden Signallampe, so dass der Fahrer auf einen möglichen Ausfall der Pumpe hingewiesen wird. Weiter dient der Druck dazu, die Einspritzpräzision zu steuern. Die Daten zur Erzielung der Einspritzpräzision sind in der Steuerlogik hinterlegt.

Schließlich kann der Drucksensor 96 dazu herangezogen werden, bei Überschreiten eines zulässigen Druckwertes ein an die Pumpe angeschlossenes Druckbegrenzungsventil 97 zu öffnen, um den zu hohen Druck in der Druckleitung 55a, 56a abzubauen. Das Medium wird bei geöffnetem Druckbegrenzungsventil 97 dem Tank 59 zugeführt, solange das Druckbegrenzungsventil geöffnet ist.

Vorteilhaft wird die Temperatur des Mediums im Tank 59 durch einen Temperatursensor 98 erfasst. Er kann auch dazu verwendet werden, um die Pumpe bei tiefen Temperaturen zu schützen. Sollte die Pumpe eingefroren sein, erzeugt der Temperatursensor 98 ein Signal, so dass die Pumpe nicht in Betrieb genommen werden kann. Der Temperatursensor 98 kann auch zur Kompensation von Temperatureffekten an den Funktionsbauteilen der Pumpe, wie beispielsweise den Einspritzinjektoren 60, herangezogen werden, damit diese auf einer bestimmten Temperatur oder in einem bestimmten Temperaturfenster gehalten werden.

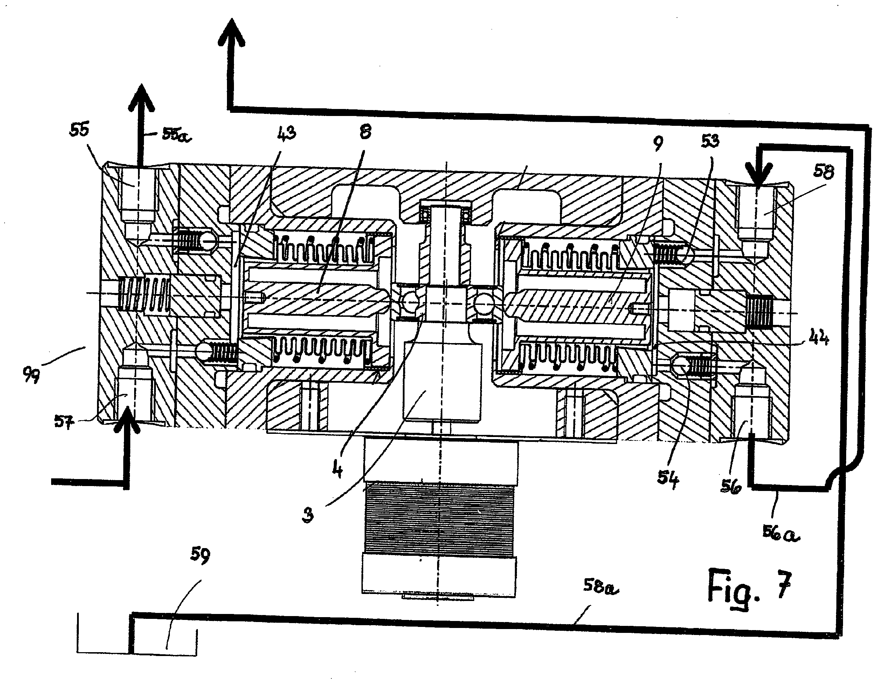

Fig. 7 zeigt beispielhaft eine Pumpe, mit der zwei unterschiedliche Medien gepumpt werden können. Im Ausführungsbeispiel können mit der Pumpe Luft und Harnstoff gefördert werden. Die Pumpe selbst ist gleich ausgebildet wie die Ausführungsform nach Fig.1. Das Medium Harnstoff befindet sich im Tank 59 und wird in der beschriebenen Weise über die Saugleitung 58a dem Sauganschluss 58 zugeführt. Durch Betätigen des Betätigungsstößels 9 mittels der Exzenterscheibe 4 wird in der beschriebenen Weise der Harnstoff, wenn der Ventilkörper 53 von seinem Ventilsitz abgehoben wird, in den Aufnahmeraum 44 gesaugt, unter Druck gesetzt und bei abgehobenem Ventilkörper 54 dem Druckanschluss 56 zugeführt. Von hier aus wird der Harnstoff über die Druckleitung 56a dem Einspritzinjektor 60 zugeführt.

Der Sauganschluss 57 ist Teil des zweiten Pumpenelementes 99, das als Kompressorpumpe ausgebildet ist. Über den Sauganschluss 57 wird Luft aus der Atmosphäre angesaugt. Durch Betätigen des Betätigungsstößels 8 mittels der Exzenterscheibe 4 wird in der beschriebenen Weise das Medium in den Aufnahmeraum 43 angesaugt und über den Druckanschluss 55 in eine Druckluftleitung 55a gefördert. Über sie wird die verdichtete Luft zum jeweiligen Einspritzinjektor 60 geleitet.

Da im Betrieb unterschiedliche Mengen an Harnstoff und Luft den Einspritzinjektoren 60 zuzuführen sind, kann die Exzenterscheibe 4 für die jeweilige Einzelpumpe für jeden Hub angepasst werden. Auf der Antriebswelle 3 können beispielsweise zwei Exzenterscheiben sitzen, die so ausgebildet sind, dass die Betätigungskolben 8, 9 unterschiedliche Hübe ausführen, um demensprechend unterschiedliche Mengen an Harnstoff und Druckluft den Einspritzinjektoren 60 zuzuführen.

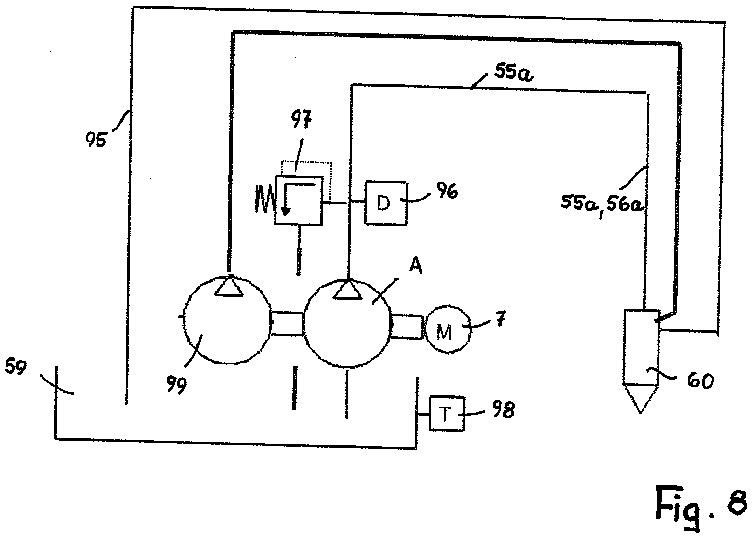

Fig. 8 zeigt den Schaltplan der Pumpe gemäß Fig. 7. Das Pumpenelement 99 ist beispielsweise als Kompressorpumpe ausgebildet. Beide Pumpenelemente 99, A können durch den gemeinsamen Antrieb 7, vorzugsweise einen Elektromotor, angetrieben werden. Das Pumpenelement 99 saugt aus der Atmosphäre Luft an, verdichtet sie und leitet sie über eine Druckluftleitung 55a zum jeweiligen Einspritzinjektor 60. Das Pumpenelement 99 kann als Kolben-, als Membran-, als Schraubpumpe und dergleichen ausgebildet sein. Das anhand der Fig. 1 bis 5 beschriebene Pumpenelement A fördert das Medium aus dem Tank 59 über die Druckleitung 55a, 56a zum Einspritzinjektor 60. In der Druckleitung 55a, 56a sitzt der Drucksensor sowie das Druckbegrenzungsventil 97. Sobald der Drucksensor 96 in der Druckleitung 55a, 56a einen zu hohen Druck erfasst, wird das Druckbegrenzungsventil 97 geöffnet, um den Druck abzubauen. Die Temperatur des Mediums im Tank 59 wird durch den Temperatursensor 98 erfasst.

Dieses Pumpensystem kann für SCR-Systeme eingesetzt werden, die auch luftunterstützt arbeiten. Während beim Pumpensystem gemäß Fig. 6 ohne Druckluft gearbeitet wird, kann das Pumpensystem gemäß Fig. 8 für beide SCR-Systeme, nämlich für ein luftloses und für ein luftunterstütztes System, eingesetzt werden.

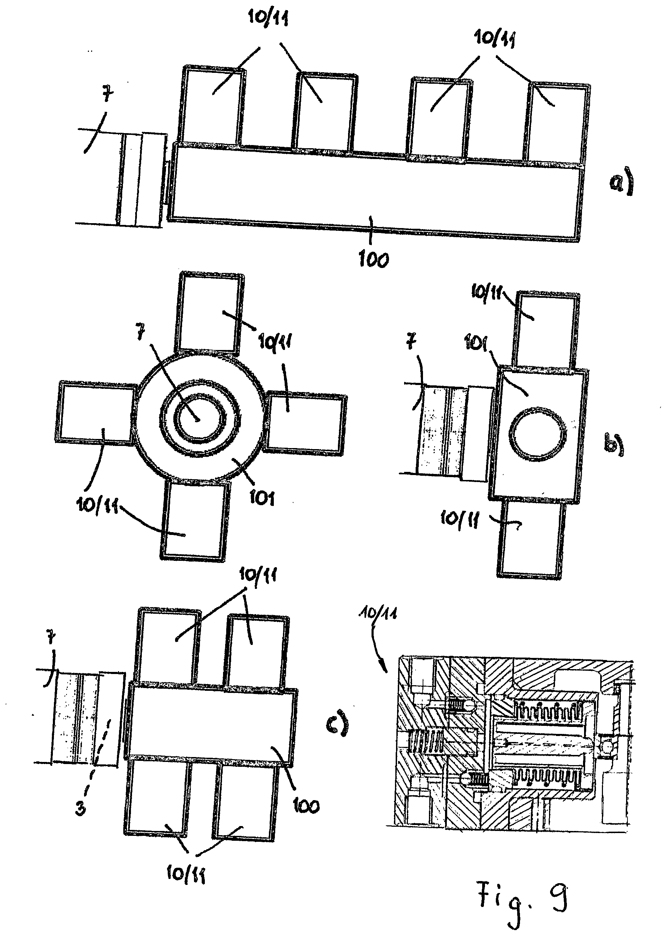

In der Antriebsverbindung zwischen den beiden Pumpenelementen A, 99 ist ein Freilauf vorgesehen, so dass der Elektromotor 7 entweder beide Pumpenelemente gleichzeitig oder nur eines der Pumpenelemente antreiben kann. Ein solcher Freilauf ist vor allem bei in Reihe geschalteten Pumpenelementen (Fig. 9a) vorgesehen, da für jedes Pumpenelement 10, 11 eine eigene Exzenterscheibe vorgesehen ist. Grundsätzlich ist ein Freilauf auch bei den Ausführungsformen gemäß Fig. 1 bis 5 machbar. Die zweite Exzenterscheibe mit dem zugehörigen Pumpenelement müsste allerdings zur ersten Exzenterscheibe mit dem zugehörigen Pumpenelement versetzt angeordnet sein. Auf diese Weise wird Antriebsenergie eingespart, der Verschleiß verringert und die Lebensdauer des Pumpensystems erhöht. Die vom Pumpenelement 99 erzeugte Druckluft kann in einen Speicher gepumpt werden. Die Harnstofflösung im Tank 59 wird für die Dosierung in den Abgasstrang nur gezielt während der Einspritzung durch das Pumpenelement A gefördert. Bei höherfrequenten oder nicht benötigten Anwendungen kann das beschriebene Pumpenelement A wie gewohnt in derselben Drehrichtung zur Förderung des Mediums angetrieben werden.

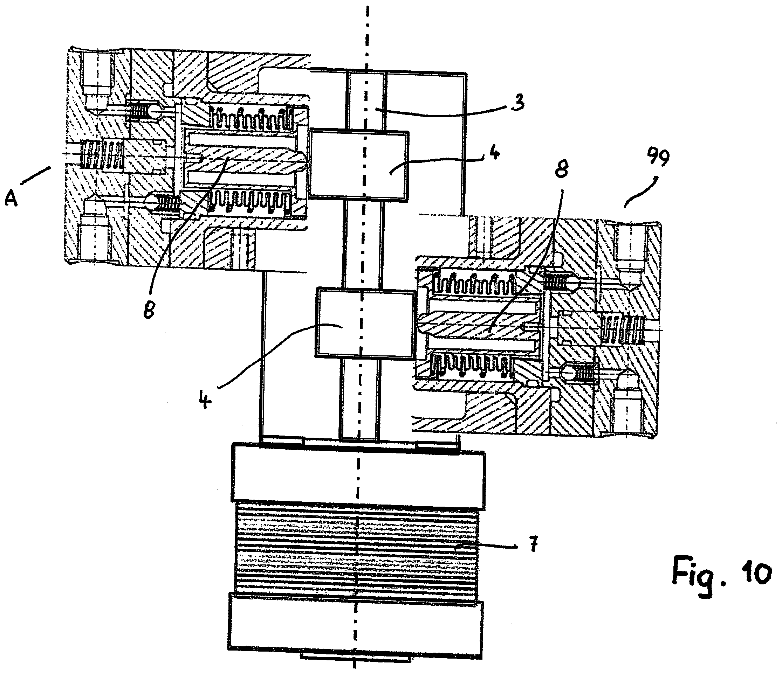

Fig. 10 zeigt ein Beispiel für den Freilauf in der Antriebsverbindung zwischen den beiden Pumpenelementen A, 99. Die beiden Pumpenelemente A, 99 sind vorteilhaft gleich ausgebildet und werden durch einen gemeinsamen Antrieb 7 angetrieben. Für beide Pumpenelemente A, 99 ist die gemeinsame Antriebswelle 3 vorgesehen. Auf ihr sitzen zwei Exzenterscheiben 4, die in der beschriebenen Weise mit den Betätigungsstößeln 8 der beiden Pumpenelemente A, 99 zusammenwirken. Die dem Pumpenelement A zugeordnete Exzenterscheibe 4 ist so auf der Antriebswelle 3 angeordnet, dass sie nur in einer Drehrichtung der Antriebswelle mitgenommen wird. Wird die Antriebswelle 3 in der anderen Richtung gedreht, bleibt die Exzenterscheibe 4 infolge eines Freilaufes stehen, so dass das Pumpenelement A nicht betätigt wird.

Die dem Pumpenelement 99 zugeordnete Exzenterscheibe 4 sitzt drehfest auf der Antriebswelle 3, so dass die Exzenterscheibe 4 unabhängig von der Drehrichtung der Antriebswelle 3 das Pumpenelement 99 betätigt.

Auf diese Weise kann gezielt die Menge und die Leistungsaufnahme der Pumpe reduziert werden. Bei unterschiedlichen Fördermedien kann gezielt die Förderung nur des einen Mediums geschaltet werden, indem die Antriebswelle 3 in der Richtung gedreht wird, in der die Exzenterscheibe 4 stehen bleibt und nicht mitgenommen wird.

Der Leerlauf zwischen einer Welle und einem darauf sitzenden Antriebselement in einer Drehrichtung der Welle ist an sich bekannt und wird darum auch nicht näher beschrieben.

Wenn eine sehr feine Dosierung der Fördermenge des im Tank befindlichen Mediums 59 gewünscht wird, kann vorteilhaft anstelle des normalen Elektromotors 7 ein Schrittmotor eingesetzt werden.

Die anhand der Fig. 1 bis 5 beschriebenen Pumpen haben die Pumpenelemente 10, 11, mit denen unterschiedlichste Pumpenausbildungen gebildet werden können. Fig. 9 zeigt schematisch und beispielhaft mögliche Anordnungen dieser Pumpenelemente 10, 11.

Bei der Pumpe gemäß Fig. 9a sind die Pumpenelemente 10, 11 in Reihe nebeneinander angeordnet. Sie sitzen auf einem Pumpengehäuse 100, in dem sich die Antriebswelle zur Betätigung der Pumpenelemente befindet. Sie ragt aus der Stirnseite des Pumpengehäuses 100 und wird vom Antrieb 7 angetrieben. Die Antriebswelle erstreckt sich in Längsrichtung innerhalb des Pumpengehäuses 100 und trägt entsprechend der Zahl der Pumpenelemente 10, 11 eine entsprechende Zahl von Exzenterscheiben, mit denen die Pumpenelemente mit der anhand der Fig. 1 bis 5 beschriebenen Weise angetrieben werden.

Fig. 9b zeigt eine sternförmige Anordnung der Pumpenelemente. Die Pumpenelemente 10, 11 sind sternförmig auf einem zylindrischen Pumpengehäuse 101 angeordnet. Im Ausführungsbeispiel sind vier Pumpenelemente 10, 11 im Winkelabstand von jeweils 90 ° am Umfang des Pumpengehäuses 100 angeordnet. Zentral durch das Pumpengehäuse 101 verläuft die Antriebswelle 3, die mit dem Antrieb 7 drehbar angetrieben ist. Auf der Antriebswelle 3 sitzt drehbar die Exzenterscheibe, mit der die Pumpenelemente 10, 11 betätigt werden.

Fig. 9c zeigt eine Ausbildung, bei der an zwei einander gegenüber liegenden Seiten des Pumpengehäuses 101 die Pumpenelemente 10, 11 in Boxerform angeordnet sind. Die Antriebswelle 3 wird durch den Antrieb 7 drehbar angetrieben und erstreckt sich zentral in Längsrichtung durch das Gehäuse 100. Auf der Antriebswelle 3 sitzen im dargestellten Ausführungsbeispiel drehfest zwei Exzenterscheiben, mit denen die einander gegenüberliegenden Pumpenelemente 10, 11 betätigt werden.

Die anhand der Fig. 9a bis 9c beispielhaft dargestellten und beschriebenen Anordnungen zeigen, dass mit den Pumpenelementen 10, 11 als Module eine Vielzahl von Anwendungen und Pumpenformen sehr einfach gebildet werden kann. Solche Pumpen lassen sich dadurch sehr einfach und kostengünstig fertigen. Die Zahl der einzusetzenden Pumpenelemente richtet sich hierbei nach dem gewünschten Pumpvolumen, das im Pumpensystem erreicht werden soll.

## Patentansprüche

1. Pumpe für ein SCR-System in Fahrzeugen, mit einem Gehäuse (1), in dem wenigstens ein Pumpenelement (10, 11) angeordnet ist, das durch einen Exzenterantrieb (3, 4) betätigbar ist, wenigstens einen Pumpenkolben (12, 13) aufweist, der mit wenigstens einem metallischen Federbalg (18, 19) versehen ist, der einen Aufnahmeraum (43, 44, 61, 62; 87) für das zu pumpende Medium radial begrenzt und beim Pumpvorgang elastisch verformbar ist, und wenigstens ein Druckventil (47, 51; 50, 54) und wenigstens ein Saugventil (48, 51; 49, 53) aufweist, die jeweils mit einem Ventilkörper (51 bis 54) versehen sind,
**dadurch gekennzeichnet, dass** in den Boden (45, 46) des Aufnahmeraumes (43, 44, 61, 62; 87) Bohrungen (47, 48; 49, 50) münden, die durch die Ventilkörper (51 bis 54) des Saug- und des Druckventiles geschlossen sind, und dass in den Boden (45, 46) des Aufnahmeraumes (43, 44, 61, 62; 87) eine Bohrung (71, 72) mündet, in der ein Ausgleichskolben (73, 74) gelagert ist, der den Aufnahmeraum (43, 44) für das Medium teilweise begrenzt, in Richtung auf den Aufnahmeraum federbelastet und Teil einer Ausgleichsvorrichtung (73 bis 76) ist, die beim Gefrieren des Mediums auftretende Volumenvergrößerungen durch Verschieben gegen Federkraft aufnimmt.

2. Pumpe nach Anspruch 1,
**dadurch gekennzeichnet, dass** der Pumpenkolben (12, 13) ein Hohlkolben ist, der vom Federbalg (18, 19) umgeben ist.

3. Pumpe nach Anspruch 1 oder 2,
**dadurch gekennzeichnet, dass** der Aufnahmeraum (61, 62) zwischen dem Federbalg (18, 19) und dem Mantel des Hohlkolbens (12, 13) gebildet ist.

4. Pumpe nach Anspruch 1 oder 2,
**dadurch gekennzeichnet, dass** der Aufnahmeraum (87) zwischen dem Federbalg (18, 19) und einem Mantel (35) eines Gehäuseteiles (24) gebildet ist.

5. Pumpe nach Anspruch 2 oder 3,
**dadurch gekennzeichnet, dass** sich der Federbalg (18, 19) zwischen einem den Hohlkolben (12, 13) umgebenden Ring (22, 23) und einem Radialflansch (16, 17) des Hohlkolbens (12, 13) erstreckt und an ihnen befestigt ist.

6. Pumpe nach einem der Ansprüche 1, 2 oder 4,
**dadurch gekennzeichnet, dass** der Federbalg (18, 19) mit dem einen Ende an einem axial verschiebbaren Ring (83) und mit dem anderen Ende an einem gehäusefesten Ring (84) befestigt ist.

7. Pumpe nach Anspruch 6,
**dadurch gekennzeichnet, dass** die beiden Ringe (83, 84) koaxial zueinander liegen.

8. Pumpe nach einem der Ansprüche 1 bis 7,
**dadurch gekennzeichnet, dass** der Federbalg (18, 19) mit radialem Abstand einen Betätigungsstößel (8, 9) umgibt, der mit seinem freien Ende an einer Exzenterscheibe (4) des Exzenterantriebes anliegt.

9. Pumpe nach Anspruch 8,
**dadurch gekennzeichnet, dass** der Betätigungsstößel (8, 9) unter der Kraft wenigstens einer Feder (20, 21; 90, 94) steht.

10. Pumpe nach Anspruch 9,
**dadurch gekennzeichnet, dass** die Feder (20, 21) eine Druckfeder ist, die den Federbalg (18, 19) umgibt.

11. Pumpe nach Anspruch 9,
**dadurch gekennzeichnet, dass** die Feder (90) eine Druckfeder ist, die an einer Scheibe (89) angreift, von welcher der Betätigungsstößel (8, 9) absteht.

12. Pumpe nach Anspruch 9,
**dadurch gekennzeichnet, dass** die Feder (94) eine Zugfeder ist, die vom Federbalg (18, 19) mit radialem Abstand umgeben ist.

13. Pumpe nach einem der Ansprüche 1 bis 12,
**dadurch gekennzeichnet, dass** mehrere Pumpenelemente (10, 11) in Reihe nebeneinander oder in Sternform oder in Boxerform an einem Gehäuse (100) angeordnet sind.

14. Pumpe nach Anspruch 13,
**dadurch gekennzeichnet, dass** den sternförmig angeordneten Pumpenelementen (10, 11) eine gemeinsame Exzenterscheibe (4) zugeordnet ist.

15. Pumpe nach einem der Ansprüche 8 bis 14,
**dadurch gekennzeichnet, dass** der Betätigungsstößel (8, 9) auf seiner dem Aufnahmeraum (43, 44) zugewandten Seite unter Kraft wenigstens einer Druckfeder (106) steht, deren Vorspannkraft größer als der Normaldruck beim Betrieb der Pumpe ist, aber kleiner als der durch Einfrieren des Mediums im Aufnahmeraum (43, 44) auftretende Druck.

16. Pumpe nach Anspruch 15,
**dadurch gekennzeichnet, dass** die Druckfeder (106) in einer Hülse (35; 104) untergebracht ist, die wenigstens teilweise vom Federbalg (18, 19) umgeben ist.

## Claims

1. Pump for an SCR system in vehicles, having a housing (1), in which at least one pump element (10, 11) is arranged, which can be actuated by an eccentric drive (3, 4), has at least one pump piston (12, 13), which is provided with at least one metallic spring bellows (18, 19), which radially delimits a receiving room (43, 44, 61, 62; 87) for the fluid to be pumped and can be elastically deformed during the pumping process, and has at least one pressure valve (47, 51; 50, 54) and at least one suction valve (48, 51; 49, 53), which are respectively provided with a valve body (51 to 54), **characterized in that** holes (47, 48; 49, 50) open out into the bottom (45, 46) of the receiving room (43, 44, 61, 62; 87), which are closed by the valve bodies (51 to 54) of the suction and pressure valve, and **in that** a hole (71, 72) opens out into the bottom (45, 46) of the receiving room (43, 44, 61, 62; 87), in which a compensating piston (73, 74) is mounted, which partially delimits the receiving room (43, 44) for the fluid, is spring-loaded in the direction of the receiving room and is part of a compensating device (73 to 76), which absorbs increases in volume occurring when freezing the liquid by displacement against spring force.

2. Pump according to Claim 1,
**characterized in that** the pump piston (12, 13) is a hollow piston, which is surrounded by the spring bellows (18, 19).

3. Pump according to Claim 1 or 2,
**characterized in that** the receiving room (61, 62) is formed between the spring bellows (18, 19) and the sheath of the hollow piston (12, 13).

4. Pump according to Claim 1 or 2,
**characterized in that** the receiving room (87) is formed between the spring bellows (18, 19) and a sheath (35) of a housing part (24).

5. Pump according to Claim 2 or 3,
**characterized in that** the spring bellows (18, 19) extends between a ring (22, 23), surrounding the hollow piston (12, 13), and a radial flange (16, 17) of the hollow piston (12, 13) and is attached thereto.

6. Pump according to one of Claims 1, 2 or 4, **characterized in that** the spring bellows (18, 19) is attached to an axially displaceable ring (83) with the one end and to a housing-fixed ring (84) with the other end.

7. Pump according to Claim 6,
**characterized in that** the two rings (83, 84) lie coaxially to one another.

8. Pump according to one of Claims 1 to 7,
unds an actuating plunger (8, 9) with a radial distance, the free end of which rests against an eccentric disc (4) of the eccentric drive.

9. Pump according to Claim 8,
**characterized in that** the actuating plunger (8, 9) is under the force of at least one spring (20, 21; 90, 94) .

10. Pump according to Claim 9,
**characterized in that** the spring (20, 21) is a compression spring, which surrounds the spring bellows (18, 19) .

11. Pump according to Claim 9,
**characterized in that** the spring (90) is a compression spring, which acts on a disc (89), from which the actuating plunger (8, 9) protrudes.

12. Pump according to Claim 9,
**characterized in that** the spring (94) is a tension spring, which is surrounded by the spring bellows (18, 19) with a radial distance.

13. Pump according to one of Claims 1 to 12,
**characterized in that** several pump elements (10, 11) are arranged in a row next to one another in star shape or in boxer form on a housing (100).

14. Pump according to Claim 13,
**characterized in that** a common eccentric disc (4) is assigned to the pump elements (10, 11) arranged in a star shape.

15. Pump according to one of Claims 8 to 14,
**characterized in that** the actuating plunger (8, 9) is under the pressure of at least one compression spring (106) on its side facing the receiving room (43, 44), the prestressing force of which is greater than the normal pressure during operation of the pump but smaller than pressure occurring due to freezing of the fluid in the receiving room (43, 44).

16. Pump according to Claim 15,
**characterized in that** the pressure spring (106) is housed in a sleeve (35; 104), which is at least partially surrounded by the spring bellows (18, 19).

## Revendications

1. Pompe pour un système SCR dans des véhicules, comportant un carter (1), dans lequel est disposé au moins un élément de pompe (10, 11), qui peut être actionné par un entraînement excentrique (3, 4) et présente au moins un piston de pompe (12, 13), qui est pourvu d'au moins un soufflet métallique (18, 19), qui délimite radialement un espace de réception (43, 44, 61, 62 ; 87) pour le fluide à pomper et qui est déformable élastiquement pendant le processus de pompage, et au moins une soupape de pression (47, 51; 50, 54) et au moins une soupape d'aspiration (48, 51; 49, 53), qui sont chacune pourvues de corps de vanne (51 à 54),
**caractérisée en ce que** dans le fond (45, 46) de l'espace de réception (43, 44, 61, 62; 87) des alésages (47, 48; 49, 50) débouchent, qui sont fermés à travers les corps de soupape (51 à 54) des soupapes de pression et d'aspiration, et **en ce que** un alésage (71, 72) débouche dans le fond (45, 46) de l'espace de réception (43, 44, 61, 62 ; 87), dans lequel est monté un piston de compensation (73, 74), qui délimite partiellement l'espace de réception (43, 44) pour le fluide, est sollicité par ressort dans la direction de l'espace de réception et fait partie d'un dispositif de compensation (73 à 76), qui absorbe l'augmentation de volume qui se produit lorsque le milieu gèle en le déplaçant en sens contraire à la force d'un ressort.

2. Pompe selon la revendication 1,
**caractérisée en ce que** le piston de pompe (12, 13) est un piston creux qui est entouré par le soufflet (18, 19).

3. Pompe selon la revendication 1 ou 2,
**caractérisée en ce que** l'espace de réception (61, 62) est formé entre le soufflet (18, 19) et la chemise du piston creux (12, 13).

4. Pompe selon la revendication 1 ou 2,
**caractérisée en ce que** l'espace de réception (87) est formé entre le soufflet (18, 19) et une chemise (35) d'une pièce de carter (24).

5. Pompe selon la revendication 2 ou 3,
**caractérisée en ce que** le soufflet (18, 19) s'étend entre une bague (22, 23) entourant le piston creux (12, 13) et une bride radiale (16, 17) du piston creux (12, 13) et s'y rattache.

6. Pompe selon une des revendications 1, 2 ou 4,
**caractérisée en ce que** le soufflet (18, 19) est fixé à une extrémité à une bague déplaçable axialement (83) et à l'autre extrémité à une bague (84) fixée au carter.

7. Pompe selon la revendication 6,
**caractérisée en ce que** les deux bagues (83, 84) sont coaxiales l'une à l'autre.

8. Pompe selon une des revendications 1 à 7,
**caractérisée en ce que** le soufflet (18, 19) entoure un poussoir d'actionnement (8, 9) à distance radiale, qui repose par son extrémité libre sur un disque excentrique (4) de l'entraînement excentrique.

9. Pompe selon la revendication 8,
**caractérisée en ce que** le poussoir d'actionnement (8, 9) est exposé à la force d'au moins un ressort (20, 21; 90, 94).

10. Pompe selon la revendication 9,
**caractérisée en ce que** le ressort (20, 21) est un ressort de compression qui entoure le soufflet (18, 19) .

11. Pompe selon la revendication 9,
**caractérisée en ce que** le ressort (90) est un ressort de compression qui agit sur un disque (89), duquel dépasse en saillie le poussoir d'actionnement (8, 9).

12. Pompe selon la revendication 9,
**caractérisée en ce que** le ressort (94) est un ressort de traction, qui est entouré par le soufflet (18, 19) à distance radiale.

13. Pompe selon une des revendications 1 à 12,
**caractérisée en ce que** plusieurs éléments de pompe (10, 11) sont disposés en série les uns à côté des autres ou en forme d'étoile ou de caisson sur un carter (100).

14. Pompe selon la revendication 13,
**caractérisée en ce qu'**aux éléments de pompe disposés en étoile (10, 11) est affecté un disque excentrique commun (4).

15. Pompe selon une des revendications 8 à 14,
**caractérisée en ce que** le poussoir d'actionnement (8, 9) sur sa face tournée vers l'espace de réception (43, 44) est exposé à la force d'au moins un ressort de compression (106), dont la force de sollicitation est supérieure à la pression normale lorsque la pompe fonctionne, mais inférieure à la pression résultant du gel du fluide dans l'espace de réception (43, 44).

16. Pompe selon la revendication 15,
**caractérisée en ce que** le ressort de compression (106) est renfermé dans un manchon (35; 104), qui est au moins partiellement entouré par le soufflet (18, 19) .
